# EUROPÄISCHE PATENTSCHRIFT

(11) **EP 1 662 168 B1**
(45) Veröffentlichungstag und Bekanntmachung des Hinweises auf die Patenterteilung: **10.10.2007**
(21) Anmeldenummer: 05024484.7
(22) Anmeldetag: 10.11.2005
(51) Int. Cl.: F16F 9/02, F16F 9/32

(54) **Pneumatische Verzögerungseinrichtung zum Abbremsen beweglicher Möbelteile, insbesondere von Auszügen**
Pneumatic deceleration device for the braking of movable furniture parts, particularly drawers
Dispositif pneumatique de décélération pour le freinage

(30) Priorität: 30.11.2004 DE 102004057561
(43) Veröffentlichungstag der Anmeldung: 31.05.2006
(73) Patentinhaber: Meier, Bruno, 33161 Hövelhof (DE)
(72) Erfinder: Vullhorst, Franz, 33161 Hövelhof (DE); Meier, Bruno, 33161 Hövelhof (DE)
(74) Vertreter: Kratzsch, Volkhard

(56) Entgegenhaltungen:
- EP-A- 0 841 451
- WO-A-95/16813
- WO-A-03/100287
- DE-B3- 10 313 659
- DE-U1- 20 107 426

## Beschreibung

Die Erfindung bezieht sich auf eine pneumatische Verzögerungseinrichtung zum Abbremsen beweglicher Möbelteile, insbesondere von Auszügen, mit den Merkmalen im Oberbegriff des Anspruchs 1.

Bei beweglichen Möbelteilen, insbesondere Auszügen, wie Schubkästen od. dgl., ist es vielfach erforderlich, diese Möbelteile, insbesondere Auszüge, beim Zuschieben vor Erreichen der Endlage so weit zu dämpfen oder abzubremsen, dass der Auszug mit Inhalt geräuscharm und weich abgedämpft in die Endlage überführt wird, wobei auch ein etwaiger Inhalt in einem derartigen Auszug entsprechend schonend behandelt wird. Eine bekannte pneumatische Verzögerungseinrichtung ist mit einem aus zwei Kolbenteilen zusammengesetzten Kolben versehen, wobei der vordere Kolbenteil eine Dichtung zum vorderen Abdichten gegen die Gehäuseinnenseite trägt und wobei ferner der vordere Kolbenteil von einer Manschette überdeckt ist, die mit einer radial nach innen gerichteten Wulstlippe nach allen Richtungen fest zwischen beiden Kolbenteilen eingespannt ist. Beide Kolbenteile sind axial fest miteinander verbunden und bilden eine Einheit. Das Gehäuse und er so gestaltete Kolben mitsamt der Dichtung und dem Dichtelement sind zylindrisch bzw. kreisringförmig gebildet. Dies führt zu dem Nachteil, dass eine derartige pneumatische Verzögerungseinrichtung relativ groß baut und einen entsprechend großen Einbauraum bedingt. Der erforderliche relativ große Durchmesser resultiert daraus, dass nur dann eine einigermaßen große Dichtwirkung mit der Dichtung und dem Dichtelement erreicht werden kann. Aufgrund des großen radialen Ausmaßes der pneumatischen Verzögerungseinrichtung kann diese bei engen zur Verfügung stehenden Einbauräumen nicht zum Einsatz kommen. In anderen Fällen wird allein wegen der erforderlichen großen Abmessungen der Verzögerungseinrichtung Raum, der nützlicher verwendet werden könnte, verschenkt.

Aus WO 03/100287 A1 ist eine pneumatische Verzögerungseinrichtung bekannt, die zum Abbremsen beweglicher Möbelteile, insbesondere von Auszügen, dient. Diese hat ein Gehäuse, einen im Gehäuse axial beweglichen Kolben und eine am Kolben angreifende Kolbenstange, die von äußeren Kräften beaufschlagt wird. Der Kolben ist axial in zwei miteinander verbundene Kolbenteile geteilt. Zwischen beiden Kolbenteilen ist ein axialer Zwischenraum gebildet, der vom Gehäuse außen begrenzt ist. In diesem Zwischenraum ist ein Dichtelement aufgenommen, das zwischen den beiden Kolbenteilen bei Belastung des Kolbens über die Kolbenstange axial mit Kräften beaufschlagt wird, der Art, dass dieses Dichtelement in Querrichtung und nach außen hin in Richtung zur Gehäusewand bewegt wird. Ein Kolbenteil, und zwar der in Einschubrichtung vordere Kolbenteil, enthält innerhalb einer Ringnut eine Dichtung zur Abdichtung gegen die Gehäusewand. Der in Einschubrichtung hintere Kolbenteil weist eine zentrale innere Bohrung und in der die Bohrung begrenzenden Wandung zwei diametral angeordnete fensterartige Langlöcher auf. In die Bohrung und die Langlöcher greift ein am anderen, vorderen Kolbenteil befindlicher Eingreifteil mit Axialspiel ein. Dieser Eingreifteil besteht aus einem axial abstrebenden Bolzen mit beidendigen widerhakenartigen Zungen, die in die beidseitigen Langlöcher des anderen Kolbenteils eingreifen können. Die Axialerstreckung der Langlöcher ist größer als diejenige des jeweiligen eingreifenden Eingreifteils, so dass der Eingreifteil mit axialem Spiel in der Öffnung lagert. Beide Kolbenteile sind mit einem Ringbund versehen als axiale Anschlagfläche für das dazwischen angeordnete, etwa schlauchförmig gestaltete Dichtelement. Bei in Einschubrichtung wirkender Kraftbeaufschlagung der Kolbenstange wird das schlauchförmige Dichtelement zwischen den beiden Ringbunden beider Kolbenteile axial gepresst der Art, dass es sich in Querrichtung und radial nach außen hin verformen soll. Aufgrund der relativ großen axialen Schlauchlänge des Dichtelements ist eine derartige Verformung jedoch und damit die zu erreichende Bremswirkung zweifelhaft. Das Gehäuse und die beiden Kolbenteile sind rotationssymmetrisch und damit als kreisförmige bzw. zylinderförmige Bauteile gebildet. Dadurch ergeben sich die eingangs bereits in diesem Zusammenhang angeführten zusätzlichen Nachteile.

Aus EP 0841451 A2 ist eine pneumatische Verzögerungseinrichtung bekannt, die einen einstückigen Kolben mit Kolbenstange aufweist. Der Kolben ist kreisförmig und weist am vorderen Ende innerhalb einer Ringnut eine Dichtung in Form eines O-Ringes auf. In Abstand davon ist der Kolben im Durchmesser reduziert der Art, dass sich zwei in Axialrichtung beabstandete Stirnflächen und eine im Durchmesser demgegenüber reduzierte äußere Umfangsfläche ergeben. Zwischen diesen ist eine verformbare Spreizhülse aufgenommen. Der Kolben enthält eine zum vorderen Ende hin offene bis zur hinteren Stirnfläche führende zentrale kreisförmige Bohrung. In den die Bohrung umgrenzenden Wandungen sind längliche, radial offene Schlitzausnehmungen enthalten, die von der Spreizhülse überdeckt sind. Beim Einschieben des Kolbens in den Zylinder ergibt sich im Zylinderraum ein Kompressionsdruck, der sich durch die zentrale innere Bohrung und die Schlitzausnehmungen fortsetzt und radial von innen direkt auf die Spreizhülse wirkt, die sich dadurch radial ausdehnen soll und an die Innenwand des Gehäuses angepresst werden soll. Es soll eine Dämpfungswirkung durch Kompression und dadurch eine Bremswirkung erzielt werden. Diese hängt vom Kompressionsdruck und dem radialen Ausdehnen der Spreizhülse ab. Die zu erreichende Bremswirkung bedingt ein Verschieben des Kolbens und damit ein Verschieben mit der Spreizhülse relativ zur Gehäusewand, wodurch die Spreizhülse einer entsprechenden Reibbelastung ausgesetzt ist, die auf Dauer zu einer schnellen Beschädigung und Zerstörung der Spreizhülse führt.

Der Erfindung liegt die Aufgabe zugrunde, eine pneumatische Verzögerungseinrichtung der eingangs genannten Art zu schaffen, die bei kleinen Abmessungen insbesondere in Querrichtung gleichwohl eine große Verzögerungswirkung hat und wegen der geringen Abmessungen auch bei beengten Platzverhältnissen zum Einsatz kommen kann.

Die Aufgabe ist bei einer pneumatischen Verzögerungseinrichtung der eingangs genannten Art gemäß der Erfindung durch die Merkmale im Anspruch 1 gelöst. Weitere Erfindungsmerkmale und besondere Ausgestaltungen ergeben sich aus den Unteransprüchen. Aufgrund der polygonen, insbesondere viereckigen, vorzugsweise z.B. rechteckförmigen, Querschnittsgestaltung des Gehäuses, des Kolbens und der entsprechend angepassten Ringverläufe der Dichtung und des Dichtelements wird bei geringen Abmessungen in Querrichtung gleichwohl eine große Reibwirkung und Verzögerung erreicht. Die Verzögerungseinrichtung kann auch bei beengten Platzverhältnissen zum Einsatz kommen und auch dann in hohem Maße wirksam sein. Dabei ist die Verzögerungseinrichtung einfach, betriebssicher und kostengünstig. Sie benötigt einen sehr geringen Bau- und Kostenaufwand.

Von Vorteil ist es, wenn der Kolben aus mehreren axial aneinander gereihten und miteinander verbundenen Kolbenteilen zusammengesetzt ist, z.B. aus zwei Kolbenteilen, drei Kolbenteilen oder mehreren. Zumindest ein Kolbenteil, z.B. der in der Anordnung vorderste, trägt eine Dichtung zur Abdichtung gegen die Gehäuseinnenseite. Zwischen diesem ersten Kolbenteil und dem nächst folgenden zweiten Kolbenteil ist ein axialer Zwischenraum gebildet, in dem ein verformbares Dichtelement aufgenommen ist. Bei drei Kolbenteilen schließt sich ein weiterer Kolbenteil unter Bildung eines axialen Zwischenraumes an, wobei auch in diesem Zwischenraum ein entsprechendes Dichtelement angeordnet ist. Da beide Dichtelemente jeweils bei Beaufschlagung des Kolbens axial gepresst und in Querrichtung und nach außen hin verformt werden, wirken diese jeweils als Bremsmanschette, die unter Erhöhung der Reibwirkung an die Gehäuseinnenseite angepresst werden. Außerdem werden die Dichtelemente axial zusammengedrückt und wirken somit auch als axiale Stoßdämpfer. Von Vorteil kann es sein, wenn der Kolben einen ersten Kolbenteil aufweist, der einen vorderen Kolbenteil bildet und die Dichtung trägt sowie eine etwa 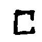 -förmige Öffnung enthält. In vorteilhafter Weise weist der Kolben einen an diesen ersten Kolbenteil anschließenden zweiten Kolbenteil auf, der einen in die Öffnung des ersten Kolbenteils eingreifenden Eingreifteil trägt. Im axialen Zwischenraum zwischen dem ersten und dem zweiten Kolbenteil ist ein erstes Dichtelement in Form einer Bremsmanschette gehalten. Von Vorteil kann es sein, wenn der Kolben einen an den zweiten Kolbenteil anschließenden dritten Kolbenteil aufweist und im axialen Zwischenraum zwischen dem zweiten und dem dritten Kolbenteil ein zweites Dichtelement gleicher Art gehalten ist und derart axial gepresst wird, dass auch dieses Dichtelement in Querrichtung und nach außen hin verformt wird und als weitere Bremsmanschette unter Erhöhung der Reibwirkung an die Gehäuseinnenseite angepresst wird. Von Vorteil kann es sein, wenn zwischen dem zweiten Kolbenteil und dem dritten Kolbenteil ein Eingreifteil am einen Kolbenteil und eine etwa 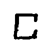 -förmige Öffnung im anderen Kolbenteil zur axialen Verbindung beider Kolbenteile miteinander vorgesehen sind. Die Öffnung kann z.B. im dritten Kolbenteil und der Eingreifteil am zweiten Kolbenteil vorgesehen sein. Von Vorteil kann es sein, wenn das Gehäuse und/oder die Kolbenteile aus Kunststoff gebildet sind.

Weitere Einzelheiten und Vorteile der Erfindung ergeben sich aus der nachfolgenden Beschreibung.

Die Erfindung ist nachfolgend anhand eines in den Zeichnungen gezeigten Ausführungsbeispieles näher erläutert. Es zeigen:
- Fig. 1: einen schematischen senkrechten Schnitt einer pneumatischen Verzögerungseinrichtung,
- Fig. 2: einen Schnitt entlang der Linie II - II in Fig. 1,
- Fig. 3: eine Seitenansicht mit teilweisem Schnitt des Kolbens der Verzögerungseinrichtung in Fig. 1 und 2 in größerem Maßstab,
- Fig. 4: eine Draufsicht des Kolbens in Fig. 3.

In den Zeichnungen ist schematisch eine pneumatische Verzögerungseinrichtung 10 gezeigt, die zum Abbremsen beweglicher Möbelteile, insbesondere von Auszügen, dient und in üblicher Weise an einen nicht weiter dargestellten Selbsteinzug eines Auszuges, z.B. eines Schubkastens, angekoppelt wird. Dies geschieht mit Hilfe einer schematisch angedeuteten Stange 11, die entweder einstückig in eine Kolbenstange 12 übergeht, wie gezeigt ist, oder statt dessen mit der Kolbenstange 12 verbunden ist.

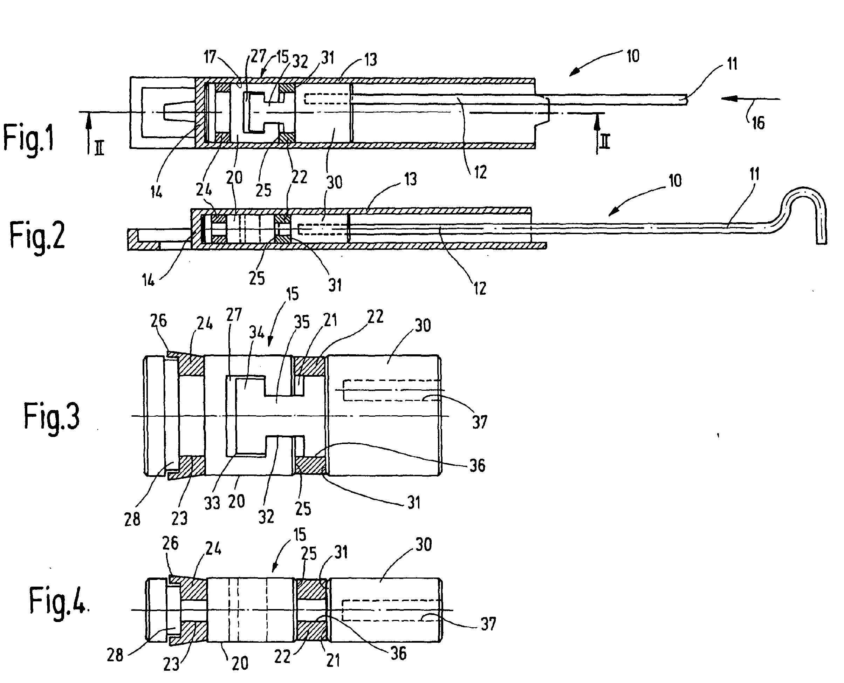

Die Verzögerungseinrichtung 10 weist ein Gehäuse 13 auf, das am einen, in Fig. 1 und 2 rechts befindlichen Ende offen und am gegenüberliegenden Ende mittels eines Stirndeckels 14 geschlossen ist. Im Gehäuse 13 ist ein Kolben 15 axial beweglich aufgenommen und geführt, an dem die Kolbenstange 12 angreift. Die Kolbenstange 12 wird über die Stange 11 von äußeren Kräften beaufschlagt, die in Pfeilrichtung 16 wirken und mittels der Verzögerungseinrichtung 10 abgebremst werden sollen.

Der Kolben 15 ist axial geteilt in einen vorderen Kolbenteil 20 und einen damit verbundenen hinteren Kolbenteil 30. Zwischen beiden Kolbenteilen 20 und 30 ist ein axiales Spiel vorhanden und ein axialer Zwischenraum 21 gebildet, in dem ein Dichtelement 22 aufgenommen ist. Der vordere Kolbenteil 20 weist im vorderen Bereich eine Nut 23 auf, in der eine Dichtung 24 zur vorderen Abdichtung gegen die Innenseite 17 des Gehäuses 13 gehalten ist. Die Dichtung 24 sitzt fest in der Nut 23. In gleicher Weise ist das Dichtelement 22 fest im Zwischenraum 21 platziert.

Das Gehäuse 13 und der Kolben 15 mit den Kolbenteilen 20 und 30 sind im Querschnitt polygon, insbesondere viereckig, gestaltet. Die Dichtung 24 und das Dichtelement 22 sind als dieser Querschnittsform entsprechende Ringelemente ausgebildet. Besonders vorteilhaft ist eine Gestaltung derart, dass das Gehäuse 13 und der Kolben 15 im Querschnitt rechteckig ausgebildet sind. Diese rechteckförmige Gestaltung, auch der Dichtung 24 und des Dichtelements 22, ist in den Zeichnungen als ein Ausführungsbeispiel dargestellt.

Wirkt in Einschubrichtung gemäß Pfeil 16 eine die Kolbenstange 12 und damit den Kolben 15 beaufschlagende Kraft, die abzubremsen ist, so wird das Dichtelement 22 zwischen einer Stirnfläche 31 des hinteren Kolbenteils 30 und einer axial beabstandeten Stirnfläche 25 des vorderen Kolbenteils 20 derart axial gepresst, dass das Dichtelement 22 in Querrichtung und nach außen hin verformt wird und als Bremsmanschette unter Erhöhung der Reibwirkung an die Innenseite 17 des Gehäuses 13 angepresst wird. Das Dichtelement 22 fungiert somit als durch Axialkraft aktivierbare Bremsmanschette, deren axial gemessene Breite bei dieser Verformung sich z.B. von 3 mm auf 2 mm verringern kann.

Die Dichtung 24 am vorderen Kolbenteil 20 ist als Lippendichtung ausgebildet, die zumindest eine abstehende Lippe 26 aufweist, die über die Außenfläche des Kolbenteils 20 übersteht und in Berührungskontakt mit der Innenseite 17 des Gehäuses 13 steht.

Der vordere Kolbenteil 20 enthält in dem Endbereich, der dem hinteren Kolbenteil 30 zugewandt ist, eine Öffnung 27. Der hintere Kolbenteil 30 trägt ein Eingreifteil 32, das in die Öffnung 27 mit Axialspiel eingreift. Die Öffnung 27 ist als etwa 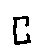 -förmiges Durchgreiffenster ausgebildet, das zu zwei einander gegenüberliegenden Außenflächen des vorderen Kolbenteils 20, insbesondere zu beiden Breitseiten des rechteckförmigen Kolbenteils 20, hin offen ist. Der Eingreifteil 32 ist als Hammerkopf 33 ausgebildet, der an die Öffnung 27 angepasst ist. Der Hammerkopf 33 weist einen Kopfteil 34 und einen letzteren tragenden Stielteil 35 auf. Die Axialerstreckung der Öffnung 27 ist größer bemessen als diejenige des darin eingreifenden Kopfteiles 34, derart, dass der Kopfteil 34 mit axialem Spiel in der Öffnung 27 lagert. Der Kolbenteil 30 weist auf dem Übergangsbereich zum Hammerkopf 33, also angrenzend an den Stielteil 35, einen Zwischenabsatz 36 auf, der im Querschnitt kleiner als der Kolbenteil 30 bemessern ist und einen Lagersitz für das Dichtelement 22 bildet, das darauf gehalten ist. Der Zwischenabsatz 36 endet unter Belassung eines axialen Zwischenraumes mit Abstand von der zugewandten Stirnfläche 25 des vorderen Kolbenteils 20.

Das Dichtelement 22 liegt bei unbeaufschlagter Kolbenstange 12, wie dies insbesondere in Fig. 3 und 4 gezeigt ist, axial an den Stirnflächen 25 und 31 beider Kolbenteile 20, 30 an und verläuft mit seiner Außenfläche in zumindest geringem Abstand von der Innenseite 17 des Gehäuses 13. Dieser entspannte, nicht gepresste Zustand des Dichtelements 22 ist in Fig. 3 und 4 gezeigt, wobei das Dichtelement 22 gleichwohl fest auf dem Zwischenabsatz 36 und zwischen den Stirnflächen 25 und 31 gehalten ist.

Wie sich aus den Zeichnungen ergibt, greift die Kolbenstange 12 in einer Koordinatenrichtung, vorzugsweise in Höhenrichtung, des Kolbens 15 betrachtet oberhalb der Kolbenmitte am hinteren Kolbenteil 30 an, der z.B. eine Aufnahmebohrung 37 zum Einstecken der Kolbenstange 12 enthält.

Das Gehäuse 13 und/oder der vordere Kolbenteil 20 und/oder der hintere Kolbenteil 30 sind aus Kunststoff gebildet.

Aufgrund der beschriebenen besonderen Gestaltung der Verzögerungseinrichtung 10, insbesondere der Rechteckform, ist eine Unterbringung der Verzögerungseinrichtung 10 bei beengten räumlichen Verhältnissen möglich bei zugleich erreichbarer großer Dichtwirkung der vorderen Dichtung 24 und Reibwirkung des Dichtelements 22. Im Vergleich zu einer etwaigen zylindrischen Gestaltung dieser Bauteile wäre mit der entsprechend kreisringförmig zu gestaltenden Dichtung 24 und dementsprechend zu gestaltenden Dichtelement 22 bei angestrebtem möglichst kleinen Radius keine so große Dichtwirkung der Dichtung 24 und Reibwirkung und zusätzliche Dämpfungswirkung des Dichtelements 22 erreichbar. Bei der beschriebenen Verzögerungseinrichtung 10 lässt sich bedarfsweise die Bremswirkung durch Vergrößerung der Oberfläche der miteinander zusammenwirkenden Bauteile noch steigern, z.B. durch innere Rillen oder Stege auf der Innenseite 17 des Gehäuses 13 und durch entsprechende Gestaltung der Dichtung 24. Die erzielbare Dämpfungswirkung kann bedarfsweise weicher dadurch gestaltet werden, dass der vom vorderen Kolbenteil 20 abgeschlossene vordere Druckraum mittels eines Ventiles oder einer Entlüftungsöffnung, z.B. im Stirndeckel 14, nach außen entlüftet wird.

Wird die Kolbenstange 12 mit einer abzubremsenden, in Pfeilrichtung 16 wirkenden Kraft beaufschlagt, so wird der hintere Kolbenteil 30 entsprechend beaufschlagt, der unter Zusammenquetschung des Dichtelements 22 in Richtung auf den vorderen Kolbenteil 20 axial verschoben wird. Hierbei bewegt sich der Stielteil 35 mit dem Kopfteil 34 innerhalb der 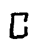 -förmigen Öffnung 27 in der Zeichnung nach links unter Nutzung der zwischen beiden Kolbenteilen 20, 30 vorhandenen Lose. Das Dichtelement 22 wird zwischen den Stirnflächen 25 und 31, die unnachgiebige Widerlager darstellen, kräftig zusammengepresst mit einhergehender Verformung nach außen und Anpressung an die Innenseite 17 des Gehäuses 13. Der Kolben 15 wird bei dieser Kraftbeaufschlagung in Pfeilrichtung 16 in dem Gehäuse 13 verschoben, wobei sich die Lippe 26 der Dichtung 24 nach außen stellt unter stärkerer Abdichtung gegenüber der Innenseite 17 des Gehäuses 13. Die Luft, die sich in dem Raum vor der Stirnfläche des Kolbenteils 20 im Gehäuse 13 befindet, wird komprimiert bei entsprechender Verkleinerung des Volumens. Aufgrund der Dichtung 24 kann diese Luft nicht entweichen. Der Druck in diesem Raum des Gehäuses 13 erhöht sich. Hierdurch wird eine entsprechende, der in Pfeilrichtung 16 wirkenden Kraft entgegengerichtete Bremskraft erzeugt. Die Hubbewegung des Kolbens 15 wird verzögert. Dies wird dadurch gesteigert, dass das Dichtelement 22 axial zwischen beiden Stirnflächen 25 und 31 zusammengepresst und ringsum nach außen verformt und an die Innenseite 17 des Gehäuses 13 verstärkt angepresst unter Erhöhung der Reibwirkung. Auf diese Weise wird eine schnelle Verzögerung auch bei relativ hohen abzubremsenden Kräften erreicht. Die Verzögerung geschieht zugleich relativ sanft und ohne stärkere Schläge. Dies ist u.a. darauf zurückzuführen, dass die beiden Kolbenteile 20 und 30 axial relativ zueinander verschoben werden, wobei mittels des hinteren Kolbenteils 30 und des die Axialkraft allein übertragenden Dichtelements 22 der vordere Kolbenteil 20 beaufschlagt wird und zwischen den beiden Stirnflächen 25 und 31 das Dichtelement 22 gepresst wird. Durch dieses Zusammenpressen des Dichtelements 22 wird eine Dämpfung erreicht.

Beim gegensinnigen Zurückbewegen des Kolbens 15 wird der Kolbenteil 30 unter Entspannung des Dichtelements 22 so weit verschoben, bis dessen Kopfteil 34 formschlüssig in der Öffnung 27 anschlägt und darüber dann der vordere Kolbenteil 20 mitgezogen wird. Die Lippe 26 der Dichtung 24 klappt dabei in die in den Zeichnungen dargestellte Ausgangsstellung zurück, wobei sich die Lippe 26 an einen Stützabschnitt 28 des vorderen Kolbenteils 20 noch anlegen kann. Bei diesem gegensinnigen Zurückschieben des Kolbens 15 strömt Luft aus der Umgebung in den Verdrängungsraum ein. Die gegensinnige Zurückverschiebebewegung des Kolbens 15 wird somit praktisch nicht oder nur wenig verzögert. Die Verzögerungseinrichtung 10 wirkt also verzögernd allein in der Richtung gemäß Pfeil 16, jedoch nicht gegensinnig dazu.

Da Selbsteinzüge bei Auszügen, insbesondere Schubkästen für Möbel, grundsätzlich für sich bekannt sind, bedarf es einer besonderen Darstellung und Beschreibung solcher Selbstauszüge nicht, an die die Verzögerungseinrichtung 10 mit der Stange 11 gekoppelt ist.

Die Verzögerungseinrichtung 10 ist außerordentlich einfach und kostengünstig, insbesondere bei der Herstellung als Kunststoffformteil des Gehäuses 13 und des Kolbens 15. Der Zusammenbau der Elemente der Verzögerungseinrichtung 10 lässt sich schnell und problemlos ohne Spezialwerkzeuge und besonderes Fachwissen bewerkstelligen, ebenso der Einbau der Verzögerungseinrichtung 10.

Beim beschriebenen Ausführungsbeispiel ist der Kolben 15 zweiteilig aus dem vorderen ersten Kolbenteil 20 und dem hinteren zweiten Kolbenteil 30 gebildet. Es versteht sich gleichwohl, dass bei einem anderen, nicht gezeigten Ausführungsbeispiel der Kolben statt dessen auch mehrere axial aneinander anschließende und miteinander verbundene Kolbenteile aufweisen kann, z.B. zumindest einen dritten Kolbenteil, der an den zweiten hinteren Kolbenteil 30 angeschlossen ist. Zwischen diesem dritten Kolbenteil und dem zweiten Kolbenteil 30 ist dann wiederum ein Zwischenraum entsprechend dem Zwischenraum 21 gebildet, wobei in diesem Zwischenraum ein weiteres Dichtelement analog dem Dichtelement 22 angeordnet ist, das zwischen den einander zugewandten Stirnflächen des zweiten Kolbenteils 30 und des dritten Kolbenteils ebenso wie das Dichtelement 22 axial zusammengepresst und radial nach außen gepresst wird. Zwischen dem zweiten Kolbenteil 30 und dem nicht gezeigten dritten Kolbenteil 30 sind zur Verbindung beider wiederum ein Eingreifteil analog dem Eingreifteil 32 einerseits und eine etwa 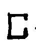 -förmige Öffnung analog der Öffnung 27 andererseits vorgesehen, in die der Eingreifteil eingreift. Dabei kann die Anordnung so getroffen sein, dass die etwa 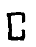 -förmige Öffnung im zweiten Kolbenteil 30 und der Eingreifteil am dritten Kolbenteil vorgesehen sind, analog der Anordnung beim ersten Kolbenteil 20 und zweiten Kolbenteil 30. Statt dessen kann die Anordnung aber auch so getroffen werden, dass die etwa 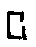 -förmige Öffnung im nicht gezeigten dritten Kolbenteil enthalten ist und der Eingreifteil, der entsprechend dem Eingreifteil 32 geformt ist, am zweiten Kolbenteil 30 angeordnet ist, und zwar an dem Ende, das dem den Eingreifteil 32 tragenden Ende axial gegenüberliegt.

Es versteht sich, dass der Kolben 15 auch aus z.B. vier oder mehreren Kolbenteilen in analoger Weise zusammengesetzt sein kann, wobei dann wiederum im axialen Zwischenraum zwischen zwei benachbarten Kolbenteilen ein Dichtelement entsprechend dem Dichtelement 22 platziert ist. Der Vorteil eines derartigen z.B. aus drei Kolbenteilen oder weiteren Kolbenteilen gebildeten Kolbens 15 liegt darin, dass eine entsprechend größere Anzahl von Dichtelementen entsprechend dem Dichtelement 22 angeordnet werden kann und dadurch die erzielbare Bremswirkung der Zahl der Dichtelemente 22 entsprechend vervielfacht werden kann.

## Patentansprüche

1. Pneumatische Verzögerungseinrichtung (10) zum Abbremsen beweglicher Möbelteile, insbesondere von Auszügen, die ein Gehäuse (13), einen im Gehäuse (13) axial beweglichen Kolben (15) und eine am Kolben (15) angreifende Kolbenstange (12) aufweist, die von äußeren Kräften beaufschlagt wird, wobei der Kolben (15) axial in miteinander verbundene Kolbenteile (20, 30) geteilt ist und zwischen zwei Kolbenteilen (20, 30) ein axialer Zwischenraum (21) gebildet ist, in dem ein Dichtelement (22) aufgenommen ist, und wobei zumindest einer der Kolbenteile innerhalb einer Nut (23) eine Dichtung (24) zur Abdichtung gegen die Gehäuseinnenseite (17) trägt und wobei zumindest einer der Kolbenteile eine Öffnung (27) enthält, in die ein Eingreifteil (32) des daran anschließenden anderen Kolbenteils (30) mit Axialspiel eingreift, und wobei die Axialerstreckung der Öffnung (27) größer als diejenige des darin eingreifenden Eingreifteils (32) bemessen ist, der Art, dass der Eingreifteil (32) mit axialem Spiel in der Öffnung (27) lagert,
**dadurch gekennzeichnet,**
**dass** das Gehäuse (13) und der Kolben (15) im Querschnitt polygon, insbesondere viereckig, gestaltet sind und die Dichtung (24) und das Dichtelement (22) als dieser Querschnittsform entsprechende Ringelemente ausgebildet sind und dass die Öffnung (27) als etwa 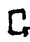 -förmiges, zu zwei einander gegenüberliegenden Außenseiten des Kolbenteils (20) hin offenes Durchgreiffenster und der Eingreifteil als an die Öffnung (27) angepasster Hammerkopf (33) ausgebildet ist, der einen in die Öffnung (27) eingreifenden Kopfteil (34) aufweist.

2. Pneumatische Verzögerungseinrichtung nach Anspruch 1,
**dadurch gekennzeichnet,**
**dass** das Gehäuse (13) und der Kolben (15) im Querschnitt rechteckförmig ausgebildet sind.

3. Pneumatische Verzögerungseinrichtung nach Anspruch 1 oder 2,
**dadurch gekennzeichnet,**
**dass** das Dichtelement (22) bei in Einschubrichtung wirkender Beaufschlagung der Kolbenstange (12) zwischen einer Stirnfläche (25) eines Kolbenteils (20) und einer axial beabstandeten Stirnfläche (31) eines axial anschließenden Kolbenteils (30) derart axial gepresst wird, dass das Dichtelement (22) in Querrichtung und nach außen hin verformt wird und als Bremsmanschette unter Erhöhung der Reibwirkung an die Gehäuseinnenseite (17) angepresst wird.

4. Pneumatische Verzögerungseinrichtung nach einem der Ansprüche 1 bis 3,
**dadurch gekennzeichnet,**
**dass** die an einem Kolbenteil (20) gehaltene Dichtung (24) als zumindest eine Lippe (26) aufweisende Lippendichtung ausgebildet ist, deren mindestens eine Lippe (26) über die Außenfläche dieses Kolbenteils (20) übersteht und in Berührungskontakt mit der Gehäuseinnenseite (17) steht.

5. Pneumatische Verzögerungseinrichtung nach einem der Ansprüche 1 bis 4,
**dadurch gekennzeichnet,**
**dass** die Öffnung (27) eines Kolbenteils (20) in dem Endbereich enthalten ist, der einem daran anschließenden Kolbenteil (30) zugewandt ist.

6. Pneumatische Verzögerungseinrichtung nach Anspruch 1,
**dadurch gekennzeichnet,**
**dass** der Kolbenteil (30) auf dem Übergangsbereich zum Hammerkopf (33) einen Zwischenabsatz (36) aufweist, der im Querschnitt kleiner als der Kolbenteil (30) bemessen ist und einen Lagersitz für das Dichtelement (22) bildet, das darauf gehalten ist.

7. Pneumatische Verzögerungseinrichtung nach Anspruch 6,
**dadurch gekennzeichnet,**
**dass** der Zwischenabsatz (36) unter Belassung eines axialen Zwischenraumes (21) mit Abstand von der zugewandten Stirnfläche (25) des axial anschließenden Kolbenteils (20) endet.

8. Pneumatische Verzögerungseinrichtung nach einem der Ansprüche 1 bis 7,
**dadurch gekennzeichnet,**
**dass** das Dichtelement (22) bei unbeaufschlagter Kolbenstange (12) axial an den Stirnflächen (25, 31) zweier axial benachbarter Kolbenteile (20, 30) anliegt und mit seinen Außenflächen in zumindest geringem Abstand von der Gehäuseinnenseite (17) verläuft.

9. Pneumatische Verzögerungseinrichtung nach einem der Ansprüche 1 bis 8,
**dadurch gekennzeichnet,**
**dass** der Kolben (15) mehrere, z.B. zwei oder drei, hintereinander angeordnete Kolbenteile (20, 30) aufweist.

10. Pneumatische Verzögerungseinrichtung nach einem der Ansprüche 1 bis 9,
**dadurch gekennzeichnet,**
**dass** der Kolben (15) einen ersten Kolbenteil (20) aufweist, der einen vorderen Kolbenteil bildet und die Dichtung (24) trägt sowie eine etwa -förmige Öffnung (27) enthält.

11. Pneumatische Verzögerungseinrichtung nach einem der Ansprüche 1 bis 10,
**dadurch gekennzeichnet,**
**dass** der Kolben (15) einen an den ersten Kolbenteil (20) anschließenden zweiten Kolbenteil (30) aufweist, der den in die 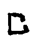 -förmige Öffnung (27) des ersten Kolbenteils (20) eingreifenden Eingreifteil (32) trägt, und dass im axialen Zwischenraum (21) zwischen dem ersten Kolbenteil (20) und dem zweiten Kolbenteil (30) das Dichtelement (22) gehalten ist.

12. Pneumatische Verzögerungseinrichtung nach einem der Ansprüche 1 bis 11,
**dadurch gekennzeichnet,**
**dass** der Kolben (15) einen an den zweiten Kolbenteil (30) anschließenden dritten Kolbenteil aufweist und im axialen Zwischenraum zwischen dem zweiten Kolbenteil (30) und dem dritten Kolbenteil ein zweites Dichtelement gehalten ist und derart axial gepresst wird, dass das Dichtelement in Querrichtung und nach außen hin verformt wird und als weitere Bremsmanschette unter Erhöhung der Reibwirkung an die Gehäuseinnenseite (17) angepresst wird.

13. Pneumatische Verzögerungseinrichtung nach Anspruch 12,
**dadurch gekennzeichnet,**
**dass** zwischen dem zweiten Kolbenteil (30) und dem dritten Kolbenteil ein Eingreifteil am einen Kolbenteil und eine 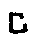 -förmige Öffnung im anderen Kolbenteil zur axialen Verbindung beider Kolbenteile miteinander vorgesehen sind.

14. Pneumatische Verzögerungseinrichtung nach Anspruch 13,
**dadurch gekennzeichnet,**
**dass** die 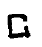 -förmige Öffnung im dritten Kolbenteil und der Eingreifteil am zweiten Kolbenteil (30) vorgesehen sind.

15. Pneumatische Verzögerungseinrichtung nach einem der Ansprüche 1 bis 14,
**dadurch gekennzeichnet,**
**dass** die Kolbenstange (12) in einer Koordinatenrichtung, vorzugsweise in Höhenrichtung, des Kolbens (15) oberhalb der Kolbenmitte am Kolben (30) angreift.

16. Pneumatische Verzögerungseinrichtung nach einem der Ansprüche 1 bis 15,
**dadurch gekennzeichnet,**
**dass** das Gehäuse (13) und/oder die Kolbenteile (20, 30) aus Kunststoff gebildet sind.

## Claims

1. Pneumatic deceleration device (10) for braking moveable furniture parts, in particular drawers, which pneumatic deceleration device (10) has a housing (13), a piston (15) which is axially moveable in the housing (13), and a piston rod (12) which engages on the piston (15) and which is acted on by external forces, with the piston (15) being divided axially into piston parts (20, 30) which are connected to one another, and with an axial intermediate space (21) being formed between two piston parts (20, 30), in which axial intermediate space (21) is held a sealing element (22), and with at least one of the piston parts carrying, within a groove (23), a seal (24) for sealing with respect to the housing inner side (17), and with at least one of the piston parts comprising an opening (27) into which an engagement part (32) of the adjoining, other piston part (30) engages with axial play, and with the axial extent of the opening (27) being greater than that of the engagement part (32) which engages therein, in such a way that the engagement part (32) is mounted with axial play in the opening (27),
**characterized**
**in that** the housing (13) and the piston (15) are of polygonal, in particular tetragonal design in cross section, and the seal (24) and the sealing element (22) are embodied as ring elements which correspond to said cross-sectional shape, and in that the opening (27) is formed as an approximately 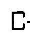 -shaped reach-through window which is open towards two outer sides, which are opposite one another, of the piston part (20), and the engagement part is embodied as a hammerhead (33) which is matched to the opening (27) and which has a head part (34) which engages into the opening (27).

2. Pneumatic deceleration device according to Claim 1,
**characterized**
**in that** the housing (13) and the piston (15) are of rectangular design in cross section.

3. Pneumatic deceleration device according to Claim 1 or 2,
**characterized**
**in that**, when the piston rod (12) is acted on in the push-in direction, the sealing element (22) is compressed axially between an end face (25) of one piston part (20) and an axially spaced-apart end face (31) of an axially adjoining piston part (30) in such a way that the sealing element (22) is deformed in the transverse direction and outwards, and, as a braking sleeve, is pressed against the housing inner side (17) so as to increase the friction action.

4. Pneumatic deceleration device according to one of Claims 1 to 3,
**characterized**
**in that** the seal (24) which is retained on one piston part (20) is embodied as a lip seal which has at least one lip (26) and whose at least one lip (26) projects beyond the outer face of said piston part (20) and is in contact with the housing inner side (17).

5. Pneumatic deceleration device according to one of Claims 1 to 4,
**characterized**
**in that** the opening (27) of one piston part (20) is comprised in that end region which faces towards an adjoining piston part (30).

6. Pneumatic deceleration device according to Claim 1,
**characterized**
**in that** the piston part (30) has, on the transition region to the hammerhead (33), an intermediate shoulder (36) which is of smaller dimension in cross section than the piston part (30) and forms a bearing seat for the sealing element (22) which is retained thereon.

7. Pneumatic deceleration device according to Claim 6,
**characterized**
**in that** the intermediate shoulder (36) ends, so as to leave an axial intermediate space (21), at a distance from the facing end face (25) of the axially adjoining piston part (20).

8. Pneumatic deceleration device according to one of Claims 1 to 7,
**characterized**
**in that**, when the piston rod (12) is not acted on, the sealing element (22) bears axially against the end faces (25, 31) of two axially adjacent piston parts (20, 30), and runs with its outer faces at least at a slight distance from the housing inner side (17).

9. Pneumatic deceleration device according to one of Claims 1 to 8,
**characterized**
**in that** the piston (15) has a plurality, for example two or three piston parts (20, 30) which are arranged one behind the other.

10. Pneumatic deceleration device according to one of Claims 1 to 9,
**characterized**
**in that** the piston (15) has a first piston part (20) which forms a front piston part and carries the seal (24) and comprises an approximately C-shaped opening (27).

11. Pneumatic deceleration device according to one of Claims 1 to 10,
**characterized**
**in that** the piston (15) has a second piston part (30) which adjoins the first piston part (20) and carries the engagement part (32) which engages into the 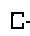 -shaped opening (27) of the first piston part (20), and in that the sealing element (22) is retained in the axial intermediate space (21) between the first piston part (20) and the second piston part (30).

12. Pneumatic deceleration device according to one of Claims 1 to 11,
**characterized**
**in that** the piston (15) has a third piston part which adjoins the second piston part (30), and a second sealing element is retained in the axial intermediate space between the second piston part (30) and the third piston part and is compressed axially in such a way that the sealing element is deformed in the transverse direction and outwards and, as a further braking sleeve, is pressed against the housing inner side (17) so as to increase the friction action.

13. Pneumatic deceleration device according to Claim 12,
**characterized**
**in that**, between the second piston part (30) and the third piston part, an engagement part on the one piston part and a 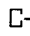 -shaped opening in the other piston part are provided for the axial connection of the two piston parts to one another.

14. Pneumatic deceleration device according to Claim 13,
**characterized**
**in that** the 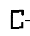 -shaped opening is provided in the third piston part and the engagement part is provided on the second piston part (30).

15. Pneumatic deceleration device according to one of Claims 1 to 14,
**characterized**
**in that** the piston rod (12) engages on the piston (30) above the piston centre in a coordinate direction, preferably in the height direction, of the piston (15).

16. Pneumatic deceleration device according to one of Claims 1 to 15,
**characterized**
**in that** the housing (13) and/or the piston parts (20, 30) are formed from plastic.

## Revendications

1. Dispositif pneumatique de décélération (10) pour le freinage de parties mobiles de meuble, en particulier de tiroirs, qui comprend un boîtier (13), un piston (15) mobile axialement dans le boîtier (13) et une tige de piston (12) attachée au piston (15), qui est soumise à des forces externes, dans lequel le piston (15) est divisé axialement en parties de piston (20, 30) reliées l'une à l'autre et un espace intermédiaire axial (21), dans lequel est logé un élément d'étanchéité (22), est formé entre deux parties de piston (20, 30), et dans lequel au moins une des parties de piston porte à l'intérieur d'une rainure (23) un joint d'étanchéité (24) pour assurer l'étanchéité par rapport au côté intérieur de boîtier (17) et dans lequel au moins une des parties de piston présente une ouverture (27), dans laquelle une partie d'engagement (32) de l'autre partie de piston (30) qui s'y raccorde s'engage avec un jeu axial, et dans lequel l'extension axiale de l'ouverture (27) est plus grande que celle de la partie d'engagement (32) qui s'y engage, de telle manière que la partie d'engagement (32) repose dans l'ouverture (27) avec un jeu axial, **caractérisé en ce que** le boîtier (13) et le piston (15) ont une section transversale polygonale, en particulier quadrangulaire, et le joint d'étanchéité (24) et l'élément d'étanchéité (22) sont des éléments annulaires d'une forme correspondant à cette forme de section transversale, et **en ce que** l'ouverture (27) est formée par une fenêtre traversante sensiblement en forme de 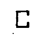 et ouverte en direction de deux côtés extérieurs opposés l'un à l'autre de la partie de piston (20) et la partie d'engagement est formée par une tête de marteau (33) adaptée à l'ouverture (27), qui comporte une partie de tête (34) s'engageant dans l'ouverture (27).

2. Dispositif pneumatique de décélération selon la revendication 1, **caractérisé en ce que** le boîtier (13) et le piston (15) ont une section transversale rectangulaire.

3. Dispositif pneumatique de décélération selon la revendication 1 ou 2, **caractérisé en ce que**, lorsque la tige de piston (12) est sollicitée dans le sens de la rentrée, l'élément d'étanchéité (22) est pressé axialement entre une face frontale (25) d'une partie de piston (20) et une face frontale espacée axialement (31) d'une partie de piston (30) se raccordant axialement, de telle manière que l'élément d'étanchéité (22) se déforme en direction transversale et vers l'extérieur et soit pressé comme une manchette de freinage sur le côté intérieur de boîtier (17) en augmentant l'action de freinage.

4. Dispositif pneumatique de décélération selon l'une quelconque des revendications 1 à 3, **caractérisé en ce que** le joint d'étanchéité (24) monté sur une partie de piston (20) est un joint à lèvre comportant au moins une lèvre (26), dont au moins une lèvre (26) dépasse au-delà de la surface extérieure de cette partie de piston (20) et est en contact matériel avec le côté intérieur de boîtier (17).

5. Dispositif pneumatique de décélération selon l'une quelconque des revendications 1 à 4, **caractérisé en ce que** l'ouverture (27) d'une partie de piston (20) est placée dans la zone d'extrémité qui est tournée vers une partie de piston (30) s'y raccordant.

6. Dispositif pneumatique de décélération selon la revendication 1, **caractérisé en ce que** la partie de piston (30) présente, sur la zone de transition vers la tête de marteau (33), un épaulement intermédiaire (36), qui a une section transversale plus petite que la partie de piston (30) et forme un siège d'appui pour l'élément d'étanchéité (22) qui est monté sur celui-ci.

7. Dispositif pneumatique de décélération selon la revendication 6, **caractérisé en ce que** l'épaulement intermédiaire (36) se termine à distance de la face frontale opposée (25) de la partie de piston (20) qui s'y raccorde axialement, en laissant un espace intermédiaire axial (21).

8. Dispositif pneumatique de décélération selon l'une quelconque des revendications 1 à 7, **caractérisé en ce que**, lorsque la tige de piston (12) n'est pas sollicitée, l'élément d'étanchéité (22) s'appuie axialement sur les faces frontales (25, 31) de deux parties de piston axialement adjacentes (20, 30) et ses surfaces extérieures se trouvent au moins à une faible distance du côté intérieur de boîtier (17).

9. Dispositif pneumatique de décélération selon l'une quelconque des revendications 1 à 8, **caractérisé en ce que** le piston (15) comprend plusieurs, par exemple deux ou trois, parties de piston (20, 30) disposées l'une derrière l'autre.

10. Dispositif pneumatique de décélération selon l'une quelconque des revendications 1 à 9, **caractérisé en ce que** le piston (15) comprend une première partie de piston (20) qui forme une partie de piston avant et porte le joint d'étanchéité (24) et comporte une ouverture sensiblement en forme de 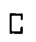 (27).

11. Dispositif pneumatique de décélération selon l'une quelconque des revendications 1 à 10, **caractérisé en ce que** le piston (15) comprend une deuxième partie de piston (30) se raccordant à la première partie de piston (20), qui porte la partie d'engagement (32) s'engageant dans l'ouverture en forme de 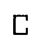 (27) de la première partie de piston (20), et **en ce que** l'élément d'étanchéité (22) est placé dans l'espace intermédiaire axial (21) entre la première partie de piston (20) et la deuxième partie de piston (30).

12. Dispositif pneumatique de décélération selon l'une quelconque des revendications 1 à 11, **caractérisé en ce que** le piston (15) comprend une troisième partie de piston se raccordant à la deuxième partie de piston (30) et un deuxième élément d'étanchéité est placé dans l'espace intermédiaire axial entre la deuxième partie de piston (30) et la troisième partie de piston et est pressé axialement de telle manière que l'élément d'étanchéité se déforme en direction transversale et vers l'extérieur et soit pressé comme une manchette de freinage sur le côté intérieur de boîtier (17) en augmentant l'action de freinage.

13. Dispositif pneumatique de décélération selon la revendication 12, **caractérisé en ce qu'**il est prévu, entre la deuxième partie de piston (30) et la troisième partie de piston, une partie d'engagement sur une partie de piston et une ouverture en forme de sur l'autre partie de piston pour relier axialement les deux parties de piston l'une à l'autre.

14. Dispositif pneumatique de décélération selon la revendication 13, **caractérisé en ce que** l'ouverture en forme de 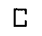 est prévue dans la troisième partie de piston et la partie d'engagement sur la deuxième partie de piston (30).

15. Dispositif pneumatique de décélération selon l'une quelconque des revendications 1 à 14, **caractérisé en ce que** la tige de piston (12) est attachée au piston (15) au-dessus du milieu du piston (30) dans une direction de coordonnées, de préférence dans la direction de la hauteur.

16. Dispositif pneumatique de décélération selon l'une quelconque des revendications 1 à 15, **caractérisé en ce que** le boîtier (13) et/ou les parties de piston (20, 30) est/sont fabriqué(es) en matière plastique.
